(19) Europäisches Patentamt
European Patent Office
Office européen des brevets

(11) EP 2 601 224 B1

# (12) EUROPEAN PATENT SPECIFICATION

(45) Date of publication and mention of the grant of the patent:
**19.09.2018 Bulletin 2018/38**

(21) Application number: **11741457.3**

(22) Date of filing: **04.08.2011**

(51) Int Cl.:
*C08F 10/06* (2006.01) *C08F 4/651* (2006.01)
*C08F 4/646* (2006.01) *C08F 4/654* (2006.01)

(86) International application number:
**PCT/EP2011/063450**

(87) International publication number:
**WO 2012/017040 (09.02.2012 Gazette 2012/06)**

## (54) CATALYST COMPONENTS FOR THE POLYMERIZATION OF OLEFINS

KATALYSATORKOMPONENTEN ZUR OLEFINPOLYMERISATION

COMPOSANTS DE CATALYSEUR POUR LA POLYMÉRISATION D'OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2010 US 401233 P**
**05.08.2010 EP 10172016**

(43) Date of publication of application:
**12.06.2013 Bulletin 2013/24**

(73) Proprietor: **Basell Poliolefine Italia S.r.l.**
**20121 Milano (IT)**

(72) Inventors:
- **MORINI, Giampiero**
  **I-44122 Ferrara (IT)**
- **BALBONI, Davide**
  **I-44122 Ferrara (IT)**
- **CRISTOFORI, Antonio**
  **I-44122 Ferrara (IT)**
- **GUIDOTTI, Simona**
  **I-40121 Bologna (IT)**
- **MIGNOGNA, Alessandro**
  **I-40121 Bologna (IT)**
- **PATER, Jochem, T., M.**
  **I-44020 Ferrara (IT)**

(74) Representative: **Giberti, Stefano**
**Basell Poliolefine Italia S.r.l.**
**Intellectual Property**
**P.le Privato Donegani 12**
**44100 Ferrara (IT)**

(56) References cited:
**CN-A- 1 453 298** **CN-A- 101 724 111**
**US-A1- 2005 239 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 601 224 B1

## Description

The present invention relates to catalyst components for the polymerization of olefins, in particular propylene, comprising a Mg dihalide based support on which are supported Ti atoms and at least an electron donor selected from a specific class of diolesters and another electron donor selected from esters of substituted aromatic monocarboxylic acids. The present invention further relates to the catalysts obtained from said components and to their use in processes for the polymerization of olefins in particular propylene.

Catalyst components for the stereospecific polymerization of olefins are widely known in the art. Concerning the polymerization of propylene, the most spread out catalyst family belongs to the Ziegler-Natta category and in general terms it comprises a solid catalyst component, constituted by a magnesium dihalide on which are supported a titanium compound and an internal electron donor compound, used in combination with an Al-alkyl compound. Conventionally however, when a higher crystallinity of the polymer is required, also an external donor (for example an alkoxysilane) is needed in order to obtain higher isotacticity. One of the preferred classes of internal donors is constituted by the esters of phthalic acid, diisobutylphthalate being the most used. The phthalates are used as internal donors in combination with alkylalkoxysilanes as external donor. This catalyst system is capable of giving good performances in terms of activity, and propylene polymers with high isotacticity and xylene insolubility endowed with an intermediate molecular weight distribution.

In the attempt of producing propylene polymer with a broader molecular weight distribution several classes of donors have been tested. US7,388,061 discloses esters belonging to the formula $R_1$-CO-O-$CR_3R_4$-A-$CR_5R_6$-O-CO-$R_2$ in which $R_1$ and $R_2$ groups, which may be identical or different, can be substituted or unsubstituted hydrocarbyl having 1 to 20 carbon atoms, $R_3$-$R_6$ groups, which may be identical or different, can be selected from the group consisting of hydrogen, halogen or substituted or unsubstituted hydrocarbyl having 1 to 20 carbon atoms, $R_1$-$R_6$ groups optionally contain one or more hetero-atoms replacing carbon, hydrogen atom or the both, said hetero-atom is selected from the group consisting of nitrogen, oxygen, sulfur, silicon, phosphorus and halogen atom, two or more of $R_3$-$R_6$ groups can be linked to form saturated or unsaturated monocyclic or polycyclic ring; A is a single bond or bivalent linking group with chain length between two free radicals being 1-10 atoms, wherein said bivalent linking group is selected from the group consisting of aliphatic, alicyclic and aromatic bivalent radicals, and can carry C1-C20 linear or branched substituents; one or more of carbon atoms and/or hydrogen atoms on above-mentioned bivalent linking group and substituents can be replaced by a hetero-atom selected from the group consisting of nitrogen, oxygen, sulfur, silicon, phosphorus, and halogen atom, and two or more said substituents on the linking group as well as above-mentioned $R_3$-$R_6$ groups can be linked to form saturated or unsaturated monocyclic or polycyclic ring.

The examples reported in the document seem to show in general, capability to produce polymers with a broad molecular weight distribution, with a polymerization activity and stereospecificity ranging from very poor (see example 68 and 86) to good performances.

It would therefore be important to find a way to improve activity and stereospecificity for this class. In CN 101724111 it is suggested to use a mixture of internal donor comprising (AI) a dibenzoic ester of a 1,3-diol with (BII) a mono or polycarboxylic aromatic or aliphatic acid ester or an ether. Only dibutylphthalate is used as donor (BII). As it results from Table 1 in the mentioned application, the donor mixture does not show a synergic effect in terms of catalyst activity which results to be intermediate between the highest activity of the diolester when used alone (comparative example 2) and that of the phthalate used alone (comparative example 4). Therefore, it is still felt the need of a catalyst component based on diolester of improved balance of activity/stereospecificity. Surprisingly, it has been found that a catalyst comprising certain diolesters used in mixture with specific ester of benzoic acid derivatives, shows a greatly improved activity stereospecificity balance. A catalyst component for the polymerization of olefins comprising a titanium compound, having at least a Ti-halogen bond and at least two electron donor compounds, supported on a Mg halide, one of which (A) belonging to diolesters of the following formula (A)

(A) 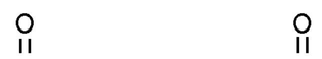

in which $R_1$-$R_4$ groups, equal to or different from each other, are hydrogen or $C_1$-$C_{15}$ hydrocarbon groups, optionally containing an heteroatom selected from halogen, P, S, N, O and Si, R groups equal to or different from each other, are selected from $C_1$-$C_{15}$ hydrocarbon groups which can be optionally linked to form a cycle and n is an integer from 0 to 5, the other electron donor compound (B) being selected from aromatic monoesters of the following formula (B)

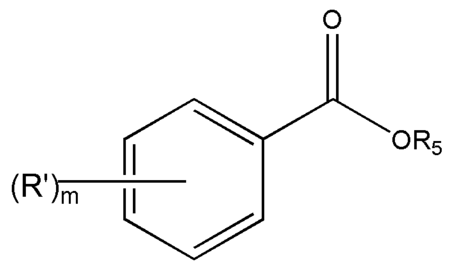

(B)

in which R' groups equal to or different from each other, are selected from $C_1$-$C_{15}$ hydrocarbon groups which can be also linked to form one or more cycles, m is an integer from 1 to 5 and $R_5$ is a $C_1$-$C_{15}$ alkyl group, said electron donors A and B being in amounts such that the A/B molar ratio is lower than 20.

Preferably, in the electron donor of formula (A), $R_1$ and $R_4$ independently are selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, $R_1$ and $R_4$ are selected from $C_1$-$C_{10}$ alkyl groups and even more preferably from $C_1$-$C_5$ alkyl groups in particular methyl.

Preferably, in the electron donor of formula (A) $R_2$-$R_3$ groups independently are selected from hydrogen, $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, $R_2$ and $R_3$ are selected from hydrogen or $C_1$-$C_{10}$ alkyl groups and even more preferably from hydrogen or $C_1$-$C_5$ alkyl groups in particular methyl. In one preferred embodiment hydrogen and methyl are preferred. In one particular preferred embodiment both $R_2$ and $R_3$ are hydrogen.

Preferably, in the electron donor of formula (A), R groups are selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, R are selected from $C_1$-$C_{10}$ alkyl groups and even more preferably from $C_1$-$C_5$ alkyl groups. Among them particularly preferred are methyl, ethyl, n-propyl and n-butyl. The index n can vary from 0 to 5 inclusive, preferably it ranges from 1 to 3 and more preferably is 1. When n is 1, the substituent R is preferably in position 4 of the benzoate ring.

Moreover, in the electron donor of formula (A), preferred structures are those in which simultaneously $R_1$ and $R_4$ are methyl, $R_2$ and $R_3$ are hydrogen and n is 1 and the R groups, which are in position 4 of the benzene ring are methyl, ethyl, n-propyl or n-butyl.

Preferably, in the electron donor of formula (B) R' is selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, R' groups are selected from $C_1$-$C_{10}$ alkyl groups and even more preferably from linear $C_1$-$C_5$ alkyl groups.

Preferably, m can vary from 1 to 5 inclusive, more preferably it ranges from 1 to 3 and even more preferably is 1. When m is 1, the substituent R' is preferably in position 4 of the benzoate ring.

Preferably, $R_5$ is selected from $C_1$-$C_{10}$ alkyl groups and even more preferably from linear or branched $C_1$-$C_5$ alkyl groups.

It constitutes a preferred embodiment that in which the diolester (A) is selected from those in which simultaneously $R_1$ and $R_4$ are methyl, $R_2$ and $R_3$ are hydrogen and n is 1 and the R groups, which are in position 4 of the benzene ring, are linear $C_1$-$C_5$ alkyls and the electron donor (B) is selected from those in which m is 1 and both the R' and $R_5$ are selected from $C_1$-$C_5$ linear alkyls groups.

The A/B molar ratio is preferably lower than 15 and more preferably lower than 10. In an especially preferred embodiment the A/B molar ratio ranges from 0.1 to 7 and more preferably from 0.5 to 5.

The amount of Ti atoms in the catalyst component preferably ranges from 2 to 10%wt, more preferably from 3 to 8% and especially from 3.5 to 7% with respect to the total weight of said catalyst component.

Non limiting examples of structures (A) are the following: 2,2-dimethyl-1,3-propandiol dibenzoate, 2-ethyl-2-methyl-1,3-propandiol dibenzoate, 2-methyl-2-i-propyl-1,3-propandiol dibenzoate, 2,2-diisopropyl-1,3-propandiol dibenzoate, 2-i-pentyl-2-i-propyl-1,3-propandiol dibenzoate, 1,3-propandiol dibenzoate, 2-methyl-1,3-propandiol dibenzoate, 2-ethyl-1,3-propandiol dibenzoate, 2-n-propyl-1,3-propandiol dibenzoate, 2-i-propyl-1,3-propandiol dibenzoate, 2-n-butyl-1,3-propandiol dibenzoate, 2-i-butyl-1,3-propandiol dibenzoate, 2-t-butyl-1,3-propandiol dibenzoate, 2-n-pentyl-1,3-propandiol dibenzoate, 2-i-pentyl-1,3-propandiol dibenzoate, 2-cyclopentyl-1,3-propandiol dibenzoate, 2-cyclohexyl-1,3-propandiol dibenzoate, 2-phenyl-1,3-propandiol dibenzoate, 2-naphtyl-1,3-propandiol dibenzoate, 2-allyl-1,3-propandiol dibenzoate, 2,4-pentanediol dibenzoate, 3-methyl-2,4-pentanediol dibenzoate, 3-ethyl-2,4-pentanediol dibenzoate, 3-n-propyl-2,4-pentanediol dibenzoate, 3-i-propyl-2,4-pentanediol dibenzoate, 3-n-butyl-2,4-pentanediol dibenzoate, 3-i-butyl-2,4-pentanediol dibenzoate, 3-t-butyl-2,4-pentanediol dibenzoate, 3-n-pentyl-2,4-pentanediol dibenzoate, 3-i-pentyl-2,4-pentanediol dibenzoate, 3-cyclopentyl-2,4-pentanediol dibenzoate, 3-cyclohexyl-2,4-pentanediol dibenzoate, 3-phenyl-2,4-pentanediol dibenzoate, 3-(2-naphtyl)-2,4-pentanediol dibenzoate, 3-allyl-2,4-pentanediol

dibenzoate, 3,3-dimethyl-2,4-pentanediol dibenzoate, 3-ethyl-3-methyl-2,4-pentanediol dibenzoate, 3-methyl-3-i-propyl-2,4-pentanediol dibenzoate, 3,3-diisopropyl-2,4-pentanediol dibenzoate, 3-i-pentyl-2-i-propyl-2,4-pentanediol dibenzoate, 3,5-heptanediol dibenzoate, 4,6-nonanediol dibenzoate, 2,6-dimethyl-3,5-heptanediol dibenzoate, 5,7-undecanediol dibenzoate, 2,8-dimethyl-4,6-nonanediol dibenzoate, 2,2,6,6,tetramethyl-3,5-hetanediol dibenzoate, 6,8-tridecanediol dibenzoate, 2,10-dimethyl-5,7-undecanediol dibenzoate, 1,3-dicyclopentyl-1,3-propanediol dibenzoate, 1,3-dicyclohexyl-1,3-propanediol dibenzoate, 1,3-diphenyl-1,3-propanediol dibenzoate, 1,3-bis(2-naphtyl)-1,3-propanediol dibenzoate, 2,4-hexanediol dibenzoate, 2,4-heptanediol dibenzoate, 2-methyl-3,5-hexanediol dibenzoate, 2,4-octanediol dibenzoate, 2-methyl-4,6-heptanediol dibenzoate, 2,2-dimethyl-3,5-hexanediol dibenzoate, 2-methyl-5,7-octanediol dibenzoate, 2,4-nonanediol dibenzoate, 1-cyclopentyl-1,3-butanediol dibenzoate, 1-cyclohexyl-1,3-butanediol dibenzoate, 1-phenyl-1,3-butanediol dibenzoate, 1-(2-naphtyl)-1,3-butanediol dibenzoate, 2,4-pentanediol-bis(4-methylbenzoate), 2,4-pentanediol-bis(3-methylbenzoate), 2,4-pentanediol-bis(4-ethylbenzoate), 2,4-pentanediol-bis(4-n-propylbenzoate), 2,4-pentanediol-bis(4-n-butylbenzoate), 2,4-pentanediol-bis(4-i-propylbenzoate), 2,4-pentanediol-bis(4-i-butylbenzoate), 2,4-pentanediol-bis(4-t-butylbenzoate), 2,4-pentanediol-bis(4-phenylbenzoate), 2,4-pentanediol-bis(3,4-dimethylbenzoate), 2,4-pentanediol-bis(2,4,6-trimethylbenzoate), 2,4-pentanediol-bis(2,6-dimethylbenzoate), 2,4-pentanediol-di-(2-naphthoate), 3-methyl-2,4-pentanediol-bis(4-n-propylbenzoate), 3-i-pentyl-2,4-pentanediol-bis(4-n-propylbenzoate), 1,1,1,5,5,5-hexafluoro-2,4-pentanediol-bis(4-ethylbenzoate), 1,1,1-trifluoro-2,4-pentanediol-bis(4-ethylbenzoate), 1,3-bis(4-chlorophenyl)-1,3-propanediol-bis(4-ethylbenzoate), 1-(2,3,4,5,6-pentafluorophenyl)-1,3-butanediol-bis(4-ethylbenzoate), 1,1-difluoro-4-phenyl-2,4-butandiol-bis(4-n-propylbenzoate), 1,1,1-trifluoro-5,5-dimethyl-2,4-hexandiol-bis(4-n-propylbenzoate), 1,1,1-trifluoro-4-(2-furyl)-2,4-butandiol-bis(4-n-propylbenzoate), 1,1,1-trifluoro-4-phenyl-2,4-butandiol-bis(4-n-propylbenzoate), 1,1,1-trifluoro-4-(2-thienyl)-2,4-butandiol-bis(4-n-propylbenzoate), 1,1,1-trifluoro-4-(4-chlorophenyl)-2,4-butandiol-bis(4-n-propylbenzoate), 1,1,1-trifluoro-4-(2-naphtyl)-2,4-butandiol-bis(4-n-propylbenzoate), 3-chloro-2,4-pentandiol-bis(4-n-propylbenzoate)

The compounds falling in formula (A) can be prepared according to generally available chemical routes such as that described in US 7,388,061.

Non limiting examples of structures (B) are the following: ethyl 3-methylbenzoate, ethyl 4-methylbenzoate, ethyl 4-ethylbenzoate, ethyl 4-n-propylbenzoate, ethyl 4-i-propylbenzoate, ethyl 4-n-butylbenzoate, ethyl 4-i-butylbenzoate, ethyl 4-t-butylbenzoate, ethyl 4-n-pentylbenzoate, ethyl 3,4-dimethylbenzoate, ethyl 2,4,6-trimethylbenzoate, ethyl 2,6-dimethylbenzoate, ethyl 4-phenylbenzoate, ethyl 4-benzoylbenzoate, ethyl 2-naphthoate.

Other examples of structure (B) can be the analogue compounds of the ones listed above, but esters of methyl, n-propyl, i-propyl, n-butyl, i-butyl, t-butyl, n-pentyl, and 2-ethylhexyl.

Very surprisingly it has been found that in the catalyst components of the invention the electron donor compound (B) interacts in a synergic way with the other components thereby leading to an improvement of the catalyst performances with respect to the catalyst containing only electron donor compound (A) or (B).

As explained above, the catalyst components of the invention comprise, in addition to the above electron donors, Ti, Mg and halogen. The catalyst components comprise a titanium compound, having at least a Ti-halogen bond and the above mentioned electron donor compounds supported on a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{q-y}X_y$ can be used, where q is the valence of titanium, y is a number between 1 and q-1, X is halogen and R is a hydrocarbon radical having from 1 to 10 carbon atoms.

The preparation of the solid catalyst component can be carried out according to several methods.

According to one of these methods, the magnesium dichloride in an anhydrous state, the titanium compound and the electron donor compounds are milled together under conditions in which activation of the magnesium dichloride occurs. The so obtained product can be treated one or more times with an excess of $TiCl_4$ at a temperature between 80 and 135°C. This treatment is followed by washings with hydrocarbon solvents until chloride ions disappeared. According to a further method, the product obtained by co-milling the magnesium chloride in an anhydrous state, the titanium compound and the electron donor compounds are treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. Another method comprises the reaction between magnesium alcoholates or chloroalcoholates (in particular chloroalcoholates prepared according to USP 4,220,554) and an excess of $TiCl_4$ in the presence of the electron donor compounds at a temperature of about 80 to 120°C.

According to a preferred method, the solid catalyst component can be prepared by reacting a titanium compound of formula $Ti(OR)_{q-y}X_y$, where q is the valence of titanium and y is a number between 1 and q, preferably $TiCl_4$, with a

magnesium chloride deriving from an adduct of formula $MgCl_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. The electron donor compounds can be added in the desired ratios during the treatment with $TiCl_4$. The preparation of catalyst components in spherical form are described for example in European patent applications EP-A-395083, EP-A-553805, EP-A-553806, EPA601525 and WO98/44001.

The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000Å generally ranges from 0.3 to 1.5 $cm^3/g$ and preferably from 0.45 to 1 $cm^3/g$.

The solid catalyst component has an average particle size ranging from 5 to 120 $\mu m$ and more preferably from 10 to 100 $\mu m$.

As mentioned, in any of these preparation methods the desired electron donor compounds can be added as such or, in an alternative way, (A) and/or (B) can be obtained *in situ* by using an appropriate precursor capable of being transformed in the desired electron donor compound by means, for example, of known chemical reactions such as etherification, alkylation, esterification, transesterification etc.

Regardless of the preparation method used, the final amount of the two or more electron donor compounds is such that the molar ratio with respect to the $MgCl_2$ is from 0.01 to 1, preferably from 0.05 to 0.5.

The solid catalyst components according to the present invention are converted into catalysts for the polymerization of olefins by reacting them with organoaluminum compounds according to known methods.

In particular, an object of the present invention is a catalyst for the polymerization of olefins $CH_2$=CHR, in which R is hydrogen or a hydrocarbyl radical with 1-12 carbon atoms, comprising the product obtained by contacting:

(i) the solid catalyst component as disclosed above and
(ii) an alkylaluminum compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums.

Suitable external electron-donor compounds include silicon compounds, ethers, esters, amines, heterocyclic compounds and particularly 2,2,6,6-tetramethylpiperidine and ketones.

Another class of preferred external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

Therefore, it constitutes a further object of the present invention a process for the (co)polymerization of olefins $CH_2$=CHR, in which R is hydrogen or a hydrocarbyl radical with 1-12 carbon atoms, carried out in the presence of a catalyst comprising the product of the reaction between:

(i) the solid catalyst component of the invention;
(ii) an alkylaluminum compound and,

(iii) optionally an electron-donor compound (external donor).

The polymerization process can be carried out according to known techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa.

The following examples are given in order to better illustrate the invention without limiting it.

**CHARACTERIZATIONS**

**Determination of X.I.**

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

**Determination of donors.**

The content of electron donors A and B has been carried out via gas-chromatography.

**EXAMPLES**

**Procedure for preparation of the spherical adducts A and B**

An initial amount of microspheroidal $MgCl_2 \cdot 2.8C_2H_5OH$ was prepared according to the method described in Example 2 of WO98/44009, but operating on larger scale. This adduct is called adduct A. The solid adduct A was then subject to thermal dealcoholation at increasing temperatures from 30 to 130°C and operating in nitrogen flow until reaching an alcohol content of 2.1 moles per mol of $MgCl_2$. This partially dealcoholated adduct is called adduct B.

**Examples 1, 2 and Comparative Example 1 - Preparation of the solid catalyst component**

Into a 500 ml round bottom flask, equipped with mechanical stirrer, cooler and thermometer 250 ml of $TiCl_4$ were introduced at room temperature under nitrogen atmosphere. After cooling to 0°C, while stirring, 10.0 g of adduct A (prepared as described above) were added into the flask. The temperature was raised to 40°C. There reaching 40°C, stirring was stopped, the solid product was allowed to settle and the supernatant liquid was siphoned off maintaining the temperature at 40°C. After the supernatant was removed, additional fresh $TiCl_4$ was added to reach the initial liquid volume again. Then, the internal donor(s) was fed as listed in Table 1, and the mixture was heated to 80°C and kept at this temperature for 2 hours. Stirring was stopped again, the solid was allowed to settle and the supernatant liquid was siphoned off. Another two titanation steps were applied; the third titanation was done for 30 minutes at 100°C, and the fourth for 30 minutes at 120°C.

After removing the supernatant liquid of the fourth titanation step, the solid was washed with anhydrous hexane six times (6 x 100 ml) in temperature gradient down to 60°C and one time (100 ml) at room temperature. The obtained solid was then dried under vacuum, analyzed and used in polymerization of propylene.

The donors charged in the preparation, the catalyst compositions and corresponding performances are described in Table 1.

**Example 3 and Comparative Example 2 - Preparation of the solid catalyst component**

In these examples, the preparation as described for Examples 1 and 2 and Comparative Example 1 was repeated, with the change that now the first titanation included an isotherm for 1 hour at 40°C. Also now, the donors were charged in the second titanation step.

The donors charged in titanation, the catalyst compositions and performances are described in Table 1.

**Examples 4-7 and Comparative Example 3 - Preparation of the solid catalyst component**

Into a 500 ml round bottom flask, equipped with mechanical stirrer, cooler and thermometer 250 ml of $TiCl_4$ were introduced at room temperature under nitrogen atmosphere. After cooling to 0°C, while stirring, the internal donor(s) as listed in Table 1 and 10.0 g of adduct B (prepared as described above) were sequentially added into the flask. The temperature was raised to 100°C and maintained for 2 hours. Thereafter, stirring was stopped, the solid product was allowed to settle and the supernatant liquid was siphoned off maintaining the temperature at 100°C. After the supernatant was removed, additional fresh $TiCl_4$ was added to reach the initial liquid volume again. The mixture was then heated at 120°C and kept at this temperature for 1 hour. Stirring was stopped again, the solid was allowed to settle and the supernatant liquid was siphoned off.

Subsequently, the solid was washed with anhydrous hexane six times (6 x 100 ml) in temperature gradient down to 60°C and one time (100 ml) at room temperature. The obtained solid was then dried under vacuum, analyzed and used in polymerization of propylene.

The donors charged in the preparation, the catalyst compositions and performances are described in Table 1.

**Examples 8-14 - Preparation of the solid catalyst component**

The preparation method described for Examples 4-7 and Comparative Example 3 was repeated, with the difference that now the donor was charged at 40°C in the first titanation, and that 3 titanation steps were applied, all at 120°C. The isotherm in the first titanation was kept for 2 hours, while the isotherm of the second and third titanation were maintained for 1 hour each.

The donors charged in the preparation, the catalyst compositions and performances are described in Table 1.

**Examples 15 and 16 and Comparative Example 4 - Preparation of the solid catalyst component**

The preparation method described for Examples 4-7 and Comparative Example 3 was used, now feeding the donors as listed in Table 1. The catalyst compositions and performances are also described in Table 1.

**General procedure for the polymerization of propylene**

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 ml of anhydrous hexane, 0.76 g of $AlEt_3$, 0.076 g of dicyclopentyldimethoxysilane (D donor) and 0.006÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

Table 1.

| Charged in Synthesis | | | | | | Catalyst Composition | | | Performance | |
|---|---|---|---|---|---|---|---|---|---|---|
| Donor A | | | Donor B | | EB | $\frac{A}{B}$ | $\frac{\text{Donor A}}{\text{EB}}$ | $\frac{A+B+EB}{Ti}$ | Mileage | XI |
| | Type | Mg/A | Type | Mg/B | Mg/EB | molar | molar | molar | kg/g | wt% |
| 1 | PD4PB | 8 | 4PEB | - | - | 13.4 | - | 0.37 | 52 | 96.5 |
| 2 | PD4PB | 16 | 4PEB | 16 | - | 1.3 | - | 0.60 | 67 | 97.7 |
| C1 | PD4PB | 16 | 4PEB | - | 16 | 30 | 0.4 | 0.50 | 51 | 95.7 |
| 3 | PD4PB | 16 | 4PEB | 16 | - | 1.2 | - | 0.39 | 74 | 96.1 |
| C2 | PD4PB | 16 | 4PEB | - | 16 | 24 | 0.3 | 0.40 | 44 | 93.7 |
| 4 | PD4PB | 8 | 4PEB | - | - | 3.7 | - | 0.45 | 67 | 98.2 |
| 5 | PD4PB | 12 | 4PEB | 24 | - | 1.4 | - | 0.65 | 65 | 97.9 |
| 6 | PD4PB | 16 | 4PEB | 16 | - | 0.9 | - | 0.44 | 71 | 97.7 |

(continued)

| Charged in Synthesis | | | | | | Catalyst Composition | | | Performance | |
|---|---|---|---|---|---|---|---|---|---|---|
| Donor A | | | Donor B | | EB | $\frac{A}{B}$ | $\frac{\text{Donor A}}{\text{EB}}$ | $\frac{A+B+EB}{Ti}$ | Mileage | XI |
| | Type | Mg/A | Type | Mg/B | Mg/EB | molar | molar | molar | kg/g | wt% |
| 7 | PD4PB | 24 | 4PEB | 12 | - | 0.4 | - | 0.40 | 58 | 96.5 |
| C3 | - | - | 4PEB | 8 | - | - | - | 0.49 | 40 | 94.6 |
| 8 | PD3MB | 8 | 3MEB | - | - | 2.7 | - | 0.57 | 88 | 98.2 |
| 9 | PD4MB | 8 | 4MEB | - | - | 1.7 | - | 0.46 | 96 | 98.2 |
| 10 | PD4EB | 8 | 4EEB | - | - | 2.7 | - | 0.40 | 115 | 98.5 |
| 11 | PD4BB | 8 | 4BEB | - | - | 2.0 | - | 0.35 | 127 | 98.2 |
| 12 | PD4FB | 8 | 4FEB | - | - | 1.1 | - | 0.56 | 58 | 96.9 |
| 13 | PD34MB | 8 | 34MEB | - | - | 2.3 | - | 0.51 | 90 | 98.0 |
| 14 | PD2NB | 8 | E2N | - | - | 1.2 | - | 0.67 | 69 | 96.5 |
| C4 | 2P2PDB | 6 | - | - | - | - | 4.4 | 0.65 | 14 | 94.0 |
| 15 | 2P2PDB | 16 | 4PEB | 16 | - | 3.1 | 4.8 | 0.67 | 31 | 97.4 |
| 16 | PDDB | 16 | 4PEB | 16 | - | 1.9 | 3.0 | 0.454 | 55 | 97.5 |

PDDB = 2,4-pentanediol dibenzoate
PD3MB = 2,4-pentanediol-bis(3-methylbenzoate)
PD4MB = 2,4-pentanediol-bis(4-methylbenzoate)
PD4EB = 2,4-pentanediol-bis(4-ethylbenzoate)
PD4PB = 2,4-pentanediol-bis(4-n-propylbenzoate)
PD4BB = 2,4-pentanediol-bis(4-n-butylbenzoate)
PD4FB = 2,4-pentanediol-bis(4-phenylbenzoate)
PD34MB = 2,4-pentanediol-bis(3,4-dimethylbenzoate)
PD2NB = 2,4-pentanediol-di-2-naphthoate
2P2PDB = 2-i-pentyl-2-i-propyl-1,3-propanediol dibenzoate
EB = ethyl benzoate
3MEB = ethyl 3-methylbenzoate
4MEB = ethyl 4-methylbenzoate
4EEB = ethyl 4-ethylbenzoate
4PEB = ethyl 4-n-propylbenzoate
4BEB = ethyl 4-n-butylbenzoate
4FEB = ethyl 4-phenylbenzoate
34MEB = ethyl 3,4-dimethylbenzoate
E2N = ethyl 2-naphthoate

## Claims

1. A catalyst component for the polymerization of olefins comprising a titanium compound, having at least a Ti-halogen bond and at least two electron donor compounds, supported on a Mg halide, one of which (A) belonging to diesters of the following formula (A)

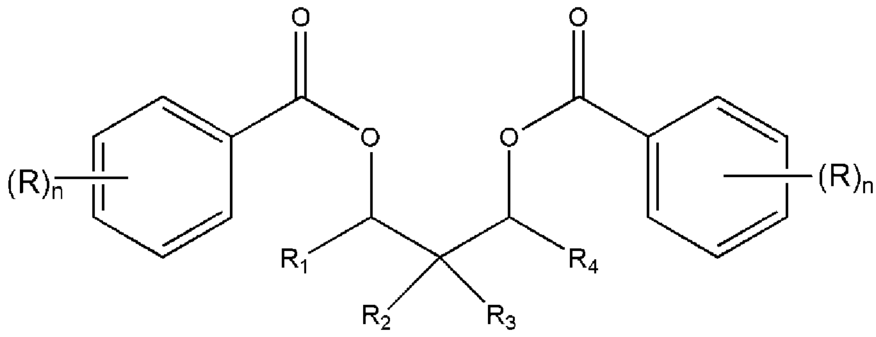

(A)

in which $R_1$-$R_4$ groups, equal to or different from each other, are hydrogen or $C_1$-$C_{15}$ hydrocarbon groups, optionally containing an heteroatom selected from halogen, P, S, N, O and Si, R equal to or different from each other, are selected from $C_1$-$C_{15}$ hydrocarbon groups which can be optionally linked to form a cycle and n is an integer from 0 to 5, the other electron donor compound (B) being selected from aromatic monoesters of the following formula (B)

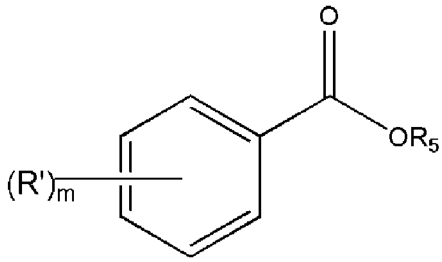

(B)

in which R' groups equal to or different from each other, are selected from $C_1$-$C_{15}$ hydrocarbon groups which can be also linked to form one or more cycles, m is an integer from 1 to 5 and $R_5$ is a $C_1$-$C_{15}$ alkyl group, said electron donors A and B being in amounts such that the A/B molar ratio is lower than 20.

2. The catalyst component of claim 1 in which, in the electron donor of formula (A), $R_1$ and $R_4$ independently are selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups.

3. The catalyst component of claim 2 in which $R_1$ and $R_4$ are selected from $C_1$-$C_{10}$ alkyl groups.

4. The catalyst component of claim 1 in which, in the electron donor of formula (A), $R_2$-$R_3$ groups are selected from hydrogen or $C_1$-$C_{10}$ alkyl groups.

5. The catalyst component of claim 4 in which both $R_2$ and $R_3$ are hydrogen.

6. The catalyst component of claim 1 in which R groups are selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups.

7. The catalyst component of claim 6 in which R is selected from $C_1$-$C_5$ alkyl groups.

8. The catalyst component of claim 1 in which n ranges from 1 to 3.

9. The catalyst component of claim 8 in which n is 1 and the substituent R is in position 4 of the benzoate ring.

10. The catalyst component of claim 1 in which R' is selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups.

**11.** The catalyst component of claim 10 in which m ranges from 1 to 3 and both the R' and $R_5$ are selected from $C_1$-$C_5$ linear alkyls groups.

**12.** The catalyst component of claim 1 in which the A/B molar ratio is lower than 15.

**13.** The catalyst component of claim 12 in which the A/B molar ratio ranges from 0.1 to 7.

**14.** A catalyst for the (co)polymerization of olefins $CH_2$=CHR, in which R is hydrogen or a hydrocarbyl radical with 1-12 carbon atoms, comprising the product obtained by contacting:

(i) the solid catalyst component according to any of the preceding claims and
(ii) an alkylaluminum compound.

**15.** A process for the (co)polymerization of olefins carried out in the presence of the catalyst according to claim 14.

**Patentansprüche**

**1.** Katalysatorkomponente für die Polymerisation von Olefinen, umfassend eine Titanverbindung mit mindestens einer Ti-Halogen-Bindung und mindestens zwei Elektronendonorverbindungen, geträgert auf einem Mg-Halogenid, wobei eine davon (A) zu Diolestern mit der folgenden Formel (A) gehört:

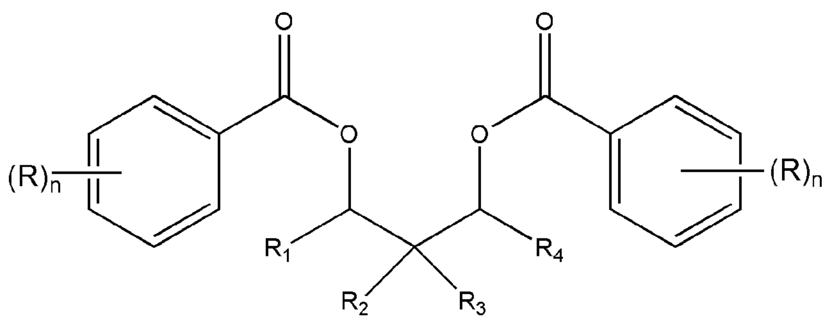

(A)

wobei die Gruppen $R_1$-$R_4$, die gleich oder voneinander verschieden sind, Wasserstoff oder $C_1$-$C_{15}$-Kohlenwasserstoffgruppen sind, die gegebenenfalls ein Heteroatom ausgewählt aus Halogen, P, S, N, O und Si enthalten, R gleich oder voneinander verschieden sind und ausgewählt sind aus $C_1$-$C_{15}$-Kohlenwasserstoffgruppen, die gegebenenfalls unter Bildung eines Cyclus verknüpft sein können, und n eine ganze Zahl von 0 bis 5 ist, wobei die andere Elektronendonorverbindung (B) ausgewählt ist aus aromatischen Monoestern mit der folgenden Formel (B):

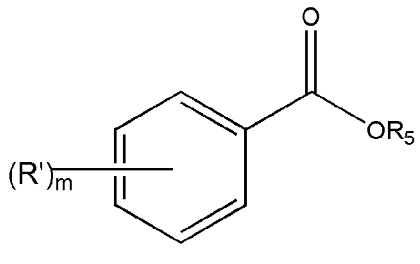

(B)

wobei die Gruppen R' gleich oder voneinander verschieden sind und ausgewählt sind aus $C_1$-$C_{15}$-Kohlenwasserstoffgruppen, die auch unter Bildung von einem oder mehreren Cyclen verknüpft sein können, m eine ganze Zahl von 1 bis 5 ist, und $R_5$ eine $C_1$-$C_{15}$-Kohlenwasserstoffgruppe ist, wobei die Elektronendonoren A und B in Mengen vorhanden sind, so dass das A/B-Molverhältnis kleiner als 20 ist.

**2.** Katalysatorkomponente nach Anspruch 1, wobei $R_1$ und $R_4$ in dem Elektronendonor der Formel (A) unabhängig

ausgewählt sind aus $C_1$-$C_{15}$-Alkylgruppen, $C_6$-$C_{14}$-Arylgruppen, $C_3$-$C_{15}$-Cycloalkylgruppen und $C_7$-$C_{15}$-Arylalkyl- oder -Alkylarylgruppen.

**3.** Katalysatorkomponente nach Anspruch 2, wobei $R_1$ und $R_4$ ausgewählt sind aus $C_1$-$C_{10}$-Alkylgruppen.

**4.** Katalysatorkomponente nach Anspruch 1, wobei Gruppen $R_2$-$R_3$ in dem Elektronendonor mit der Formel (A) die ausgewählt sind aus Wasserstoff oder $C_1$-$C_{10}$-Alkylgruppen.

**5.** Katalysatorkomponente nach Anspruch 4, wobei beide Gruppen $R_2$ und $R_3$ Wasserstoff sind.

**6.** Katalysatorkomponente nach Anspruch 1, wobei die Gruppen R ausgewählt sind aus $C_1$-$C_{15}$-Alkylgruppen, $C_6$-$C_{14}$-Arylgruppen, $C_3$-$C_{15}$-Cycloalkylgruppen und $C_7$-$C_{15}$-Arylalkyl- oder -Alkylarylgruppen.

**7.** Katalysatorkomponente nach Anspruch 6, wobei R ausgewählt ist aus $C_1$-$C_5$-Alkylgruppen.

**8.** Katalysatorkomponente nach Anspruch 1, wobei n im Bereich von 1 bis 3 liegt.

**9.** Katalysatorkomponente nach Anspruch 8, wobei n 1 ist und der Substituent R in Position 4 des Benzoatrings ist.

**10.** Katalysatorkomponente nach Anspruch 1, wobei R' ausgewählt ist aus $C_1$-$C_{15}$-Alkylgruppen, $C_6$-$C_{14}$-Arylgruppen, $C_3$-$C_{15}$-Cycloalkylgruppen und $C_7$-$C_{15}$-Arylalkyl- oder -Alkylarylgruppen.

**11.** Katalysatorkomponente nach Anspruch 10, wobei m im Bereich von 1 bis 3 liegt und sowohl R' als auch $R_5$ ausgewählt sind aus linearen $C_1$-$C_5$-Alkylgruppen.

**12.** Katalysatorkomponente nach Anspruch 1, wobei das A/B-Molverhältnis kleiner als 15 ist.

**13.** Katalysatorkomponente nach Anspruch 12, wobei das A/B-Molverhältnis im Bereich von 0,1 bis 7 liegt.

**14.** Katalysator zur (Co)polymerisation von Olefinen $CH_2$=CHR, wobei R Wasserstoff oder ein Kohlenwasserstoffrest mit 1-12 Kohlenstoffatomen ist, welcher das Produkt umfasst, das erhalten wird durch Kontaktieren von:

(i) der festen Katalysatorkomponente gemäß einem der vorhergehenden Ansprüche und
(ii) einer Alkylaluminiumverbindung.

**15.** Verfahren zur (Co)polymerisation von Olefinen, das in Anwesenheit des Katalysators gemäß Anspruch 14 durchgeführt wird.

## Revendications

**1.** Composant de catalyseur pour la polymérisation d'oléfines comprenant un composé de titane, ayant au moins une liaison Ti-halogène et au moins deux composés donneurs d'électrons, supporté sur un halogénure de Mg, dont l'un (A) appartient aux diolesters de la formule (A) suivante

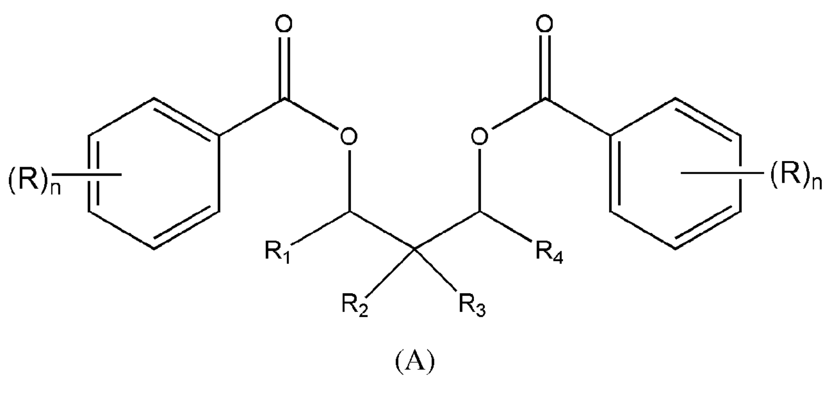

(A)

dans laquelle les groupes $R_1$-$R_4$, identiques ou différents les uns des autres, sont hydrogène ou des groupes hydrocarbonés en $C_1$-$C_{15}$, contenant éventuellement un hétéroatome choisi parmi halogène, P, S, N, O et Si, R, identiques ou différents les uns des autres, sont choisis parmi les groupes hydrocarbonés en $C_1$-$C_{15}$ qui peuvent être éventuellement liés pour former un cycle et n est un nombre entier allant de 0 à 5, l'autre composé donneur d'électrons (B) étant choisi parmi les monoesters aromatiques de la formule (B) suivante

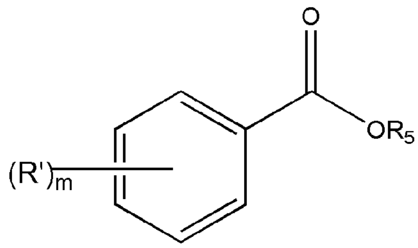

(B)

dans laquelle R', identiques ou différents les uns des autres, sont choisis parmi les groupes hydrocarbonés en $C_1$-$C_{15}$ qui peuvent être également liés pour former un ou plusieurs cycles, m est un nombre entier allant de 1 à 5 et $R_5$ est un groupe alkyle en $C_1$-$C_{15}$, lesdits donneurs d'électrons A et B étant dans des quantités telles que le rapport molaire A/B est inférieur à 20.

2. Composant de catalyseur selon la revendication 1 dans lequel, dans le donneur d'électrons de formule (A), $R_1$ et $R_4$ sont indépendamment choisis parmi les groupes alkyle en $C_1$-$C_{15}$, les groupes aryle en $C_6$-$C_{14}$, les groupes cycloalkyle en $C_3$-$C_{15}$, et les groupes arylalkyle ou alkylaryle en $C_7$-$C_{15}$.

3. Composant de catalyseur selon la revendication 2 dans lequel $R_1$ et $R_4$ sont choisis parmi les groupes alkyle en $C_1$-$C_{10}$.

4. Composant de catalyseur selon la revendication 1 dans lequel, dans le donneur d'électrons de formule (A), les groupes $R_2$-$R_3$ sont choisis parmi hydrogène ou les groupes alkyle en $C_1$-$C_{10}$.

5. Composant de catalyseur selon la revendication 4 dans lequel à la fois $R_2$ et $R_3$ sont hydrogène.

6. Composant de catalyseur selon la revendication 1 dans lequel les groupes R sont choisis parmi les groupes alkyle en $C_1$-$C_{15}$, les groupes aryle en $C_6$-$C_{14}$, les groupes cycloalkyle en $C_3$-$C_{15}$, et les groupes arylalkyle ou alkylaryle en $C_7$-$C_{15}$.

7. Composant de catalyseur selon la revendication 6 dans lequel R est choisi parmi les groupes alkyle en $C_1$-$C_5$.

8. Composant de catalyseur selon la revendication 1 dans lequel n va de 1 à 3.

9. Composant de catalyseur selon la revendication 8 dans lequel n est 1 et le substituant R est en position 4 du noyau benzoate.

10. Composant de catalyseur selon la revendication 1 dans lequel R' est choisi parmi les groupes alkyle en $C_1$-$C_{15}$, les groupes aryle en $C_6$-$C_{14}$, les groupes cycloalkyle en $C_3$-$C_{15}$, et les groupes arylalkyle ou alkylaryle en $C_7$-$C_{15}$.

11. Composant de catalyseur selon la revendication 10 dans lequel m va de 1 à 3 et à la fois R' et $R_5$ sont choisis parmi les groupes alkyle linéaires en $C_1$-$C_5$.

12. Composant de catalyseur selon la revendication 1 dans lequel le rapport molaire A/B est inférieur à 15.

13. Composant de catalyseur selon la revendication 12 dans lequel le rapport molaire A/B va de 0,1 à 7.

14. Catalyseur pour la (co)polymérisation d'oléfines $CH_2$=CHR, dans lequel R est hydrogène ou un radical hydrocarbyle ayant de 1 à 12 atomes de carbone, comprenant le produit obtenu par mise en contact de :

(i) le composant de catalyseur solide selon l'une quelconque des revendications précédentes et
(ii) un composé d'alkylaluminium.

**15.** Procédé pour la (co)polymérisation d'oléfines effectué en présence du catalyseur selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7388061 B
- CN 101724111
- US 4298718 A
- US 4495338 A
- US 4220554 A
- US 4399054 A
- US 4469648 A
- EP 395083 A
- EP 553805 A
- EP 553806 A
- EP 601525 A
- WO 9844001 A
- WO 9844009 A